# EUROPEAN PATENT APPLICATION

(11) **EP 4 492 211 A1**
(43) Date of publication of application: **15.01.2025**
(21) Application number: 23185463.9
(22) Date of filing: 14.07.2023
(51) Int. Cl.: G06F 3/0481, G06F 3/0483, G06F 3/0488

(54) **METHOD OF CREATING AND EDITING A WORK SPACE**

(71) Applicant: Canon Production Printing Holding B.V., 5914 HH Venlo (NL)
(72) Inventor: Kroes, Arjan, Venlo (NL); Baltarete-Becheriu, Nichita, Venlo (NL)
(74) Representative: Canon Production Printing IP Department

(57) **Abstract**

A method of controlling a workspace on a screen and being arranged to display at least one application window on the screen simultaneously in a to be defined layout, the method being characterized by the steps of opening the workspace comprising the at least one application window, in a header of an application window opening a selection menu which comprises toggles for individually turning on or off a visibility of each pane assigned to the at least one application window, and a user operable element for activating a workspace editor for editing the workspace, activating the workspace editor by means of the user operable element, the workspace editor displaying the to be defined layout with handlers that enable moving, resizing, tabbing and turning off or on of the visibility of the at least one displayed pane, receiving user input at the screen by mouse or touch in order to edit a configuration of the at least one pane by means of the handlers, automatically saving the edited configuration of the at least one pane, receiving user input at the screen by mouse or touch in order to close the workspace editor and continuing working in the workspace.

## Description

### Field of the invention

The invention relates to a method of controlling a workspace on a screen and being arranged to display at least one application window on the screen simultaneously in a to be defined layout, the method comprising the step of opening the workspace comprising the at least one application window.

The following definitions hold for the present invention.

A workspace is a memory storage facility for temporary use.

Hereinafter a handler may also be called a user operable element and vice versa.

A paned window is a window in a graphical user interface that has multiple parts, layers, or sections. A pane is a rectangular area within an on-screen window that contains information for the user. A window may have many panes. A window may be an application window which facilitates the use of an application or - in short - app. A screen may comprises one or more application windows.

A tab is a horizontal menu on control panels, dialog boxes and applications. Clicking the tab jumps the user to that function, and that tab becomes highlighted.

A toggle is a key or command that is operated the same way but with opposite effect on successive occasions. Toggling means to switch from one effect, feature, or state to another by using a toggle.

A splitter bar - or short: a splitter - is a thin dark line which divides a window into separate, resizable sections like application windows or panes. When you hover the mouse over a splitter bar, the cursor will change into either a horizontal or vertical arrow. The mouse may be clicked, held and dragged to resize a section of a screen.

### Background of the invention

Screen-based graphic user interfaces are frequently used for operating electronically controlled apparatus or systems such as, for example, a document processing system or a printing system. Depending upon the complexity of the system, the user interface may be utilized by a plurality of users who may have different functions and responsibilities, different needs, different skills and/or different authorizations. It is therefore convenient to customize the layout of the graphical user interface in accordance with the needs of individual users or groups of users.

In a conventional user interface, a procedure for customizing the layout comprises the steps of selecting a display item, entering the settings that determine the window configuration and the level of detail for that display item, and repeating these steps for each display item the user is interested in.

Moving, resizing and managing workspaces are usually part of a main interface of the user, for example a stage manager has been implemented in operating system iOS. The implementation allows the user to activate a stage manager mode by going to a top button and adding a new application window to the current interface. This is disadvantageous since the stage manager mode adds interface elements to existing apps to move, resize and manage them in the main workflow of the user making it possible to unintentionally change the interface layout. When the mode is deactivated the interface will force the use of full screen apps, losing the possibility to view multiple apps in one interface.

A Linux tiling manager focusses on controlling the interface layout by using keyboard shortcuts, which requires the user to have an keyboard connected. The removing, moving, resizing and focusing of windows can be done at all times and does not use a special mode for editing. However, this way of working in Linux increases the risk of unintentional changes.

It is an object of the invention to provide a method by which the layout of the user interface can be efficiently customized with less risks of unintentionally changes.

### Summary of the invention

In order to achieve that object, the method according to the invention comprises the steps of:
- in a header of an application window opening a selection menu which comprises toggles for individually turning on or off a visibility of each pane assigned to the at least one application window, and a user operable element for activating a workspace editor for editing the workspace;
- activating the workspace editor by means of the user operable element;
- the workspace editor displaying the to be defined layout with handlers that enable moving, resizing, tabbing and turning off or on of the visibility of at least one displayed pane;
- receiving user input at the screen by mouse or touch in order to edit a configuration of the at least one pane by means of the handlers;
- automatically saving the edited configuration of the at least one pane;
- receiving user input at the screen by mouse or touch in order to close the workspace editor; and
- continuing working in the workspace.

By doing so, the work space environment is separated from the work space editor environment reducing the risk of unintentional changes to the layout of the configuration of the at least one pane.

The invention is based on the consideration that a user who is particularly interested in a certain set of display items will frequently want to make the same or similar settings for these display items in order to, for example, increase the size of the windows in order to improve the visibility of the display items of interest, to move , to tab or to turn off or on of the visibility of the at least one displayed pane.

The handlers are meant to be interface controls which act as user operable elements on the screen of the workspace editor.

More specific optional features of the invention are indicated in the dependent claims.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description.

### Brief description of the drawings

Embodiment examples will now be described in conjunction with the drawings, wherein:
- Fig. 1: is a screen of a workspace to be controlled according to the present invention;
- Fig. 2: is a screen of the workspace with an expanded contextual menu;
- Fig. 3: is a screen of the workspace editor according to the present invention;
- Fig. 4: is a flow diagram of the method according to the present invention.

### Detailed description of the embodiments

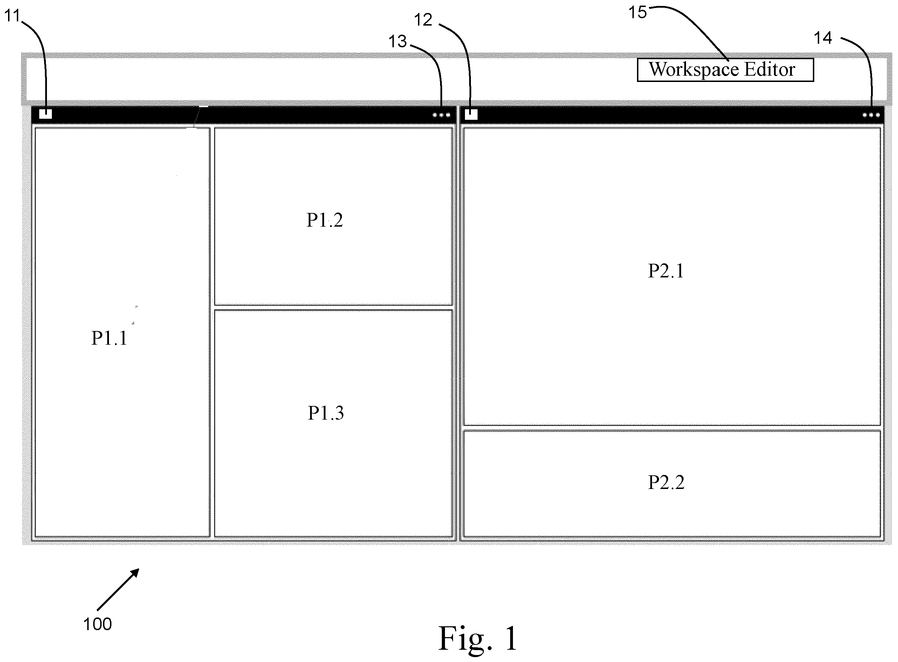

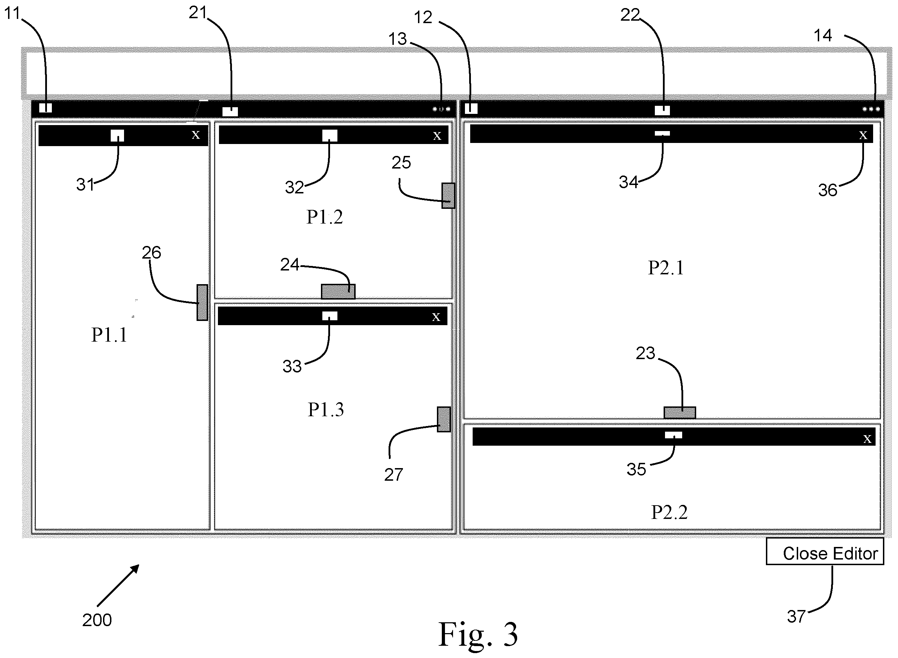

Fig. 1 is an example of a screen 100 of a user interface comprising a workspace with multiple application windows 11, 12 and several panes per application window in a main workflow. The workspace can consist of one or multiple applications at all times. Each application has one or multiple panes as represented in Fig. 1. Each pane has a header area - black coloured top bar in Fig. 1 - that is optional and can be hidden. The application header will give the user access to a contextual menu 13, 14. Via the contextual menu 13, 14 the workspace editor may be launched and each pane may be made visible or invisible. Application window 11 comprises three panes P1.1, P1.2 and P1.3. Application window 12 comprises two panes P2.1 and P2.2. The screen 100 also shows an alternative way to launch the workspace editor. Thereto the screen 100 comprises a button 15 to launch the workspace editor. It is noted that the screen 100 does not comprise the interface controls - also known as handlers - to resize or move the panes. This is advantageous since by isolating the main workflow from the workspace editor mode which will be shown in Fig. 3 the risk of unintentionally adapting the workspace in the main workflow.

The example in Fig. 1 comprises two application windows 11, 12. However, one or more than two application windows may be envisioned.

Fig. 1 shows an application window with two panes and an application window with three panes. However, in general the method according to the present invention is applicable to any application window comprising one or more panes.

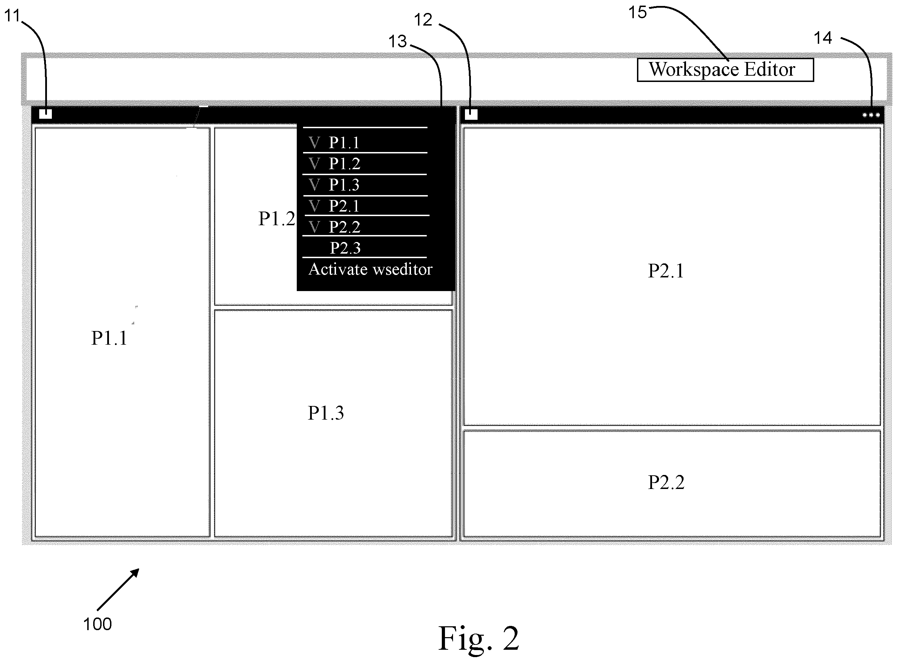

Fig. 2 shows the screen 100 with the contextual menu 13 in an unfolded way. Each visible pane is provided with a pane item with a check item, each invisible pane is only provided with a pane item. The pane item can be toggled to make the pane visible or invisible. For example when the invisible pane 2.3 is selected to be made visible the pane item for pane 2.3 may be touched to toggle to a visible state of pane 2.3 on the screen 100. The unfolded contextual menu 13 also comprises an item to activate the workspace editor. Each application window 11, 12 has a contextual menu which allows to toggle pane visibility and the option to turn on the workspace editor. Once activated, additional elements like handlers will become visible in an overlay screen - as will be shown in Fig. 3 - for turning off panes, resize and move the panes. When the workspace editor is deactivated the interface keeps the configured layout.

Fig. 3 shows the screen 200 when the button 15 is activated on screen 100 in Fig. 1 in order to launch the workspace editor or when in the contextual menu 13 the workspace editor is activated. The screen 200 resembles the screen 100 but the screen 200 is in the workspace editor mode and interface controls like handlers 21 - 27, 31 - 36 are added to the screen 200. The workspace editor activation item in the contextual menu may not be a toggle item; once the workspace editor is active, the workspace editor menu option may be disabled. An info bar 37 at the bottom right corner that contains a hyperlink with the text "Close editor". By clicking on the info bar 37 the workspace editor will be closed.

Handlers 21, 22 are configured to move the first application window 11 and the second application window 12 respectively. Handlers 23, 24, 25, 26, 27 are configured to resize the panes P2.1, P1.2, P1.2, P1.1, P1.3 respectively. The black application header of each application window 11, 12 enables the movement of the application window, even if the application header is hidden. Fig. 1 shows the black application header which is not hidden. If in Fig, 1 the application header would be hidden, the black box would not be visible in Fig. 1. However, when activating the workspace editor by means of button 15 the black application header will show up in Fig. 3 in the workspace editor. Since the black application header is visible in Fig. 3 the application can be moved even if the application has a hidden application header.

Handlers 31 - 35 are configured to move the panes P1.1, P1.2, P1.3, P2.1, P2.2 individually. The black pane header of each pane P1.1, P1.2, P1.3, P2.1, P2.2 enables the movement of the pane, even if the pane header is hidden in Fig. 1. Fig.1 does not show the black pane header for the panes P1.1, P1.2, P1.3, P2.1, P2.2. However, when activating the workspace editor by means of button 15 in Fig. 1 or via the contextual menu 13 in Fig. 2 the black pane headers will show up in screen 200 in the workspace editor mode in Fig. 3. Since the black pane header is visible in Fig. 3 the pane can be moved even if the pane has a hidden pane header.

In the workspace editor mode shown in Fig. 3 each pane header of the panes P1.1, P1.2, P1.3, P2.1, P2.2 comprises a closing button 36 to close the corresponding pane. In fact there is no difference between "closing a pane" by means of button 36 and "making the pane invisible" by means of the pane item in the contextual menu 13.

By doing so, the problem of the use of hidden application headers, hidden panes header, hidden panes and hidden applications that cannot be moved in the main workflow is solved in the workspace editor. The interface controls like handlers are present on the screen 100 in the main workflow shown in Fig. 1 and a workspace edit mode for configuring the interface is created in screen 200 shown in Fig. 3 which does actually comprise the handlers.

According to an embodiment the screen is configured to be manipulated by a mouse in a cursor version, a handler for resizing the application windows and/or the panes is equal to a splitter between panes and/or application windows, and the method comprises the step of, upon activating the workspace editor, changing at least one visual characteristic of the splitter. For example, the splitter may get thicker and/or the color of the splitter may change.

In case of a touch screen the handlers for resizing the application windows and/or panes are user operable elements placed on or nearby the splitters of the application windows and/or panes.

According to an embodiment the move handlers have a bigger size in a touch version of the screen than in the cursor version of the screen wherein a mouse is used by the user. The handlers for resizing the application windows and/or the panes may be bigger on the screen of the workspace editor shown in Fig. 3 than in the main flow screen shown in Fig. 1 in order to facilitate easy resizing of the panes in the workspace editor by means of touch with finger tips.

According to an embodiment a handler for moving application windows and/or panes is bigger in size in a cursor version of the screen than in a touch version of the screen. The handlers for moving application windows and/or panes may have a fixed size, one size for the cursor version, and another for touch.

The above-mentioned embodiments are advantageous since a greater accessibility is created for workspace management when using touch screens.

The user interface according to this invention may be part of a printing system, wherein the application windows according to the invention are dedicated for applications that are used to control the printing of print jobs, or the control an actual state of the printing system. The printer has a print controller to do so. The user interface comprises the screen 100 shown in Fig. 1, wherein the print controller is configured to control the workspace on the screen 200 in Fig. 3 according to the present invention. In general, the workspace editor is useful to any software application that is using apps with panes and also multiple apps in the same workspace.

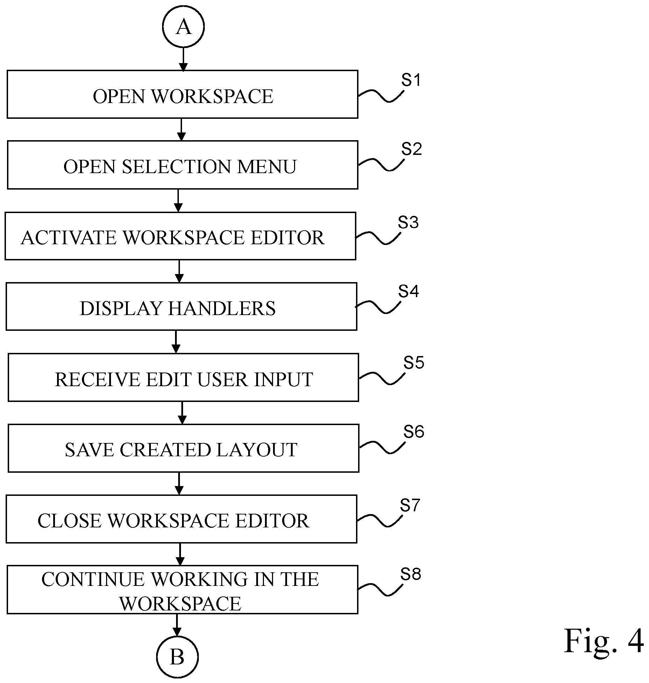

Fig. 4 is a flow diagram of the method according to the present invention. The method controls a workspace on a screen and is arranged to display at least one application window on the screen simultaneously in a to be defined layout. The layout may be defined from scratch.

The method start in a start point A which leads to a first step S1.

In the first step S1 the workspace is opened which comprises the at least one application window.

In a second step S2, in a header of an application window a selection menu is opened which comprises toggles for individually turning on or off a visibility of each pane assigned to the at least one application window, and a user operable element for activating a workspace editor for editing the workspace.

In a third step S3 the workspace editor is activated by means of the user operable element.

In a fourth step S4 the workspace editor displays the to be defined layout with handlers that enable moving, resizing, tabbing and turning off or on of the visibility of the at least one displayed pane.

In a fifth step S5 user input is received at the screen by mouse or touch in order to edit a configuration of the at least one pane by means of the handlers.

In a sixth step S6 the edited configuration of the at least one pane is automatically saved.

In a seventh step S7 user input is received at the screen by mouse or touch in order to close the workspace editor.

In an eighth step S8 working in the workspace is continued.

The method ends in an end point B.

## Claims

1. A method of controlling a workspace on a screen and being arranged to display at least one application window on the screen simultaneously in a to be defined layout, the method being **characterized by** the steps of:
- opening the workspace comprising the at least one application window;
- in a header of an application window opening a selection menu which comprises toggles for individually turning on or off a visibility of each pane assigned to the at least one application window, and a user operable element for activating a workspace editor for editing the workspace;
- activating the workspace editor by means of the user operable element;
- the workspace editor displaying the to be defined layout with a plurality of handlers that enable moving, resizing, tabbing and turning off or on of the visibility of at least one displayed pane;
- receiving user input at the screen in order to edit a configuration of the at least one pane by means of the handlers;
- automatically saving the edited configuration of the at least one pane;
- receiving user input at the screen in order to close the workspace editor; and
- continuing working in the workspace.

2. The method according to claim 1, wherein the screen is configured to be manipulated by a mouse in a cursor version or by touch.

3. The method according to claim 1 or 2, wherein the plurality of handlers comprises at least one handler for resizing application windows and/or panes and at least one handler for moving application windows and/or panes.

4. The method according to any one of the preceding claims, wherein the screen is part of a user interface of a printing system.

5. The method according to any one of the preceding claims, wherein the at least one displayed pane comprises a pane header area.

6. The method according to claim 5, wherein the pane header area is configurable to be hidden.

7. The method according to claim 3, wherein the screen is configured to be manipulated by a mouse in a cursor version, a handler for resizing the application windows and/or the panes is equal to a splitter between panes and/or application windows, and the method comprises the step of, upon activating the workspace editor, changing at least one visual characteristic of the splitter.

8. The method according to claim 3, wherein the at least one handler for moving application windows and/or panes is smaller in size in a cursor version of the screen than in a touch version of the screen.

9. A printer having a print controller and a user interface comprising a screen, wherein the print controller is configured to control a workspace on the screen according to the method of any one of the preceding claims.

10. A software product comprising program code on a machine-readable medium, which program code, when loaded into a print controller of a printer according to claim 9, causes the print controller to execute the steps of the method according to any one of the claims 1-8.
